# EUROPÄISCHE PATENTSCHRIFT

(11) **EP 2 818 889 B1**
(45) Veröffentlichungstag und Bekanntmachung des Hinweises auf die Patenterteilung: **15.05.2019**
(21) Anmeldenummer: 14000242.9
(22) Anmeldetag: 23.01.2014
(51) Int. Cl.: G01S 7/40, G01S 13/86, G01S 13/93, G01S 7/02

(54) **Kraftfahrzeug mit wenigstens einem die Daten eines Radarsensors verwendenden Fahrerassistenzsystem**
Motor vehicle with at least one driver assistance system using the data of a radar sensor
Véhicule automobile comprenant au moins un système d'assistance du conducteur utilisant les données d'un capteur radar

(30) Priorität: 29.06.2013 DE 102013010924
(43) Veröffentlichungstag der Anmeldung: 31.12.2014
(73) Patentinhaber: MAN Truck & Bus AG, 80995 München (DE)
(72) Erfinder: Hoffmann, Guido, 82216 Maisach (DE); Körner, Tobias, 86420 Diedorf (DE)
(74) Vertreter: Liebl, Thomas

(56) Entgegenhaltungen:
- WO-A2-03/029045
- DE-A1- 10 107 219
- DE-A1-102007 051 190
- DE-A1-102009 021 284
- US-A1- 2005 033 497

## Beschreibung

Gegenstand der Erfindung ist ein Kraftfahrzeug insbesondere Nutzfahrzeug mit wenigstens einem Steuergerät, wobei auf dem Steuergerät programmgestützt wenigstens ein Fahrerassistenzsystem zur Ausführung kommt, wobei dieses wenigstens eine Fahrerassistenzsystem Abstands- und/ oder Geschwindigkeitsdaten von einem Radarsensor verwendet, die das Steuergerät von dem mit diesem verbundenen Radarsensor übernimmt und wobei das Steuergerät die Eigengeschwindigkeit des Kraftfahrzeugs zur Veränderung des Schaltzustandes des Radarsensors nutzt. Weiter gehört es zur Erfindung ein Verfahren zum Betrieb eines solchen Kraftfahrzeugs anzugeben.

In Kraftfahrzeugen nach dem heutigen technischen Stand kommen häufig sogenannte Fahrerassistenzsysteme zum Einsatz, die den Fahrer einerseits von Routinetätigkeiten befreien und die andererseits vor Gefahrensituationen warnen oder aktiv in das Fahrgeschehen selbstständig eingreifen, wenn der Fahrzeugführer z.B. aufgrund seiner längeren Reaktionszeit dazu nicht in der Lage ist, um so eine Notsituation abzuwenden oder deren Folgen abzumildern.

Ein derartiges Fahrerassistenzsystem ist unter der Bezeichnung Adaptive Cruise Control (ACC), bzw. in einer neueren Version als Adaptive Cruise Control Stop&Go (ACC Stop&Go) bekannt geworden. Hinter dieser Bezeichnung verbirgt sich ein programmgestütztes Verfahren, das auf dem Steuergerät zur Ausführung kommt und das vorausfahrende Fahrzeuge erkennt, deren Geschwindigkeiten ermittelt und durch Brems- und Motoreingriffe einen gewünschten Abstand einhält. Während das ursprüngliche ACC-Verfahren bei niedrigen Geschwindigkeiten nicht eingesetzt werden konnte, erlaubt das neuere ACC Stop&Go durch verbesserte Sensoren die Verwendung bis zum Stillstand. Rollt der Verkehr an, genügt eine kurze Bestätigung des Fahrers, und das Fahrzeug folgt wieder selbstständig dem Vorausfahrenden. Selbstverständlich bleiben bei den ACC-Verfahren alle Eingriffsmöglichkeiten des Fahrers erhalten.

Ein anderes derartiges System das auf die Daten des Radarsensors zugreift ist das sogenannte Notbremssystem das auch unter der Bezeichnung "Advanced Emergency Braking System" (AEBS) bzw. unter der Bezeichnung "Autonomous Emergency Braking system" (AEB System, AEBs) bekannt ist. Dieses vorausschauende Notbremssystem löst in kritischen Situationen Maßnahmen zur Kollisionsvermeidung oder -verminderung aus. Dazu gehört es, den Fahrer vorausschauend zu warnen, wenn es z.B. zu einer Kollision kommen kann. Ist eine Kollision unvermeidbar, löst das System eine Notbremsung aus, die das Verletzungsrisiko zumindest reduziert.

Kern der vorstehend beschriebenen Fahrerassistenzsysteme sind Radarsensoren, deren Aufgabe es ist, Objekte zu erkennen sowie deren Geschwindigkeit und Position im Vergleich zur Bewegung des den Radarsensor tragenden Fahrzeugs zu ermitteln. Zu diesem Zweck sendet der Radarsensor Signale aus, die im sogenannten Mikrowellenfrequenzbereich liegen und die von den im Strahlbereich des Radarsensors befindlichen Objekten reflektiert werden. Heute häufig verwendet sind Dauerstrichradargeräte mit Frequenzmodulation (FMCW), die z.B. im Frequenzbereich 76 GHz bis 77 GHz senden. Aus dem Vergleich von Phase und Amplitude des reflektierten Radarsignals mit Phase und Amplitude des Ausgesandtensignals werden Rückschlüsse auf die Position eines Objektes gezogen. Die Relativgeschwindigkeit und Entfernung eines Objektes zu dem den Radarsensor tragenden Fahrzeugs wird anhand des so genannten Doppler-Effektes, also der Frequenzverschiebung zwischen dem ausgesandten und dem empfangenen Signal und der Zeitverzögerung zwischen diesen ermittelt. Die Reichweiten derartiger moderner Radarsensoren werden mit ca. 250m angegeben, der Öffnungswinkel mit ca. 30° (vgl. z.B. Fernbereichsradarsensor LRR3 der Firma Bosch).

Selbstverständlich können neben den vorstehend angesprochenen Dauerstrichradargeräten mit Frequenzmodulation auch andere Systeme mit anderen Modulationsarten zum Einsatz kommen, die Erfindung ist natürlich nicht auf die vorstehend beispielhaft genannte Radarsensortechnologie beschränkt. Gleiches gilt für Reichweite und Öffnungswinkel.

Zwar wird im Allgemeinen davon ausgegangen, dass derartige Radarsensoren aufgrund ihrer geringen Strahlungsleistung gesundheitlich unbedenklich sind, es existieren aber aufgrund der relativ kurzen Zeit, die diese Geräte im Straßenverkehr eingesetzt werden und der relativ geringen Anzahl von Kraftfahrzeugen die bislang mit diesen Geräten ausgerüstet sind, keine Langzeiterfahrungen. Andererseits ist bekannt, dass Radargeräte im militärischen Bereich, die über unzureichende Abschirmung verfügten, in den 1980er Jahren zu einer großen Anzahl von Krebserkrankungen führten. Aufgrund der fehlenden Erfahrung mit Radarsensoren im Straßenverkehr bei hoher Einsatzdichte ist die Auswirkung auf den menschlichen Körper zumindest als bedenklich einzustufen. Es wurden deshalb bereits Bestrebungen bekannt, die Ausgangsleistung solcher Geräte geschwindigkeitsabhängig zu regeln, um das Gefährdungspotenzial, insbesondere für Personen, so gering wie möglich zu halten. Ein derartiger Vorschlag ist beispielsweise in der DE 10 2009 021 284 A1 beschrieben. Weiter wird dort vorgeschlagen, gegebenenfalls den Radarsensor auch völlig zu deaktivieren.

Diese vorgeschlagene Lösung weist insofern Mängel auf, als Fahrsituationen gegeben sind, in denen der Radarsensor auch bei Stillstand betrieben werden muss und andererseits Situationen gegeben sind, in denen der Radarsensor auch bei höheren Geschwindigkeiten abgeschaltet werden kann.

Die weitere WO 03/029045 A2 offenbart ein Wamsystem für ein Fahrzeug, das wenigstens zwei an dem Fahrzeug vorgesehene, sich in ihrem Messprinzip unterscheidende Sensoren aufweist, mittels denen ein Hindernis erfasst werden kann. Auf diese Weise wird die Genauigkeit der Objekterfassung erhöht.

Aus der DE 101 07 219 A1 geht ein Verfahren zum Betreiben eines Fahrgeschwindigkeit-Regelsystems für ein Fahrzeug hervor, bei dem eine in Bezug auf eine Strahlungscharakteristik justierbare Sensoreinheit und eine Steuereinheit vorgesehen sind. Dabei wird hier vor einer ersten Inbetriebnahme des Systems eine Information in die Steuereinheit eingebracht, die einen Betrieb der Sensoreinheit verhindert, solange die Sensoreinheit nicht justiert ist.

Die weitere DE 10 2007 051 190 A1 betrifft ein Land- oder Wasserfahrzeug mit einem Fahrerassistenzsystem, bei dem das Fahrerassistenzsystem Abstands- und/oder Geschwindigkeitsdaten von einem Radarsensor verwendet, die ein Steuergerät von dem mit diesem verbundenen Radarsensor übernimmt. Das Steuergerät nutzt dabei die Eigengeschwindigkeit des Land- oder Wasserfahrzeugs zur Veränderung des Schaltstands des Radarsensors.

Aus der US 2005/0033497 A1 ist ein Verfahren zur Steuerung eines fahrzeugseitigen Sensors bekannt, bei dem in Abhängigkeit von der Verwendung eines Fahrzeug-Sicherheitssystems, in Abhängigkeit von der Fahrzeuggeschwindigkeit sowie in Abhängigkeit von dem aktuell ausgewählten Gang ein Sensor zur Erfassung der Fahrzeugumgebung aktiviert und deaktiviert wird.

Ausgehend vom vorstehenden Stand der Technik ist es Aufgabe der Erfindung, eine Anordnung und ein Verfahren anzugeben, das es erlaubt, die Einschaltzeiten der Sendeeinheit eines in einem Kraftfahrzeug verbauten Radarsensors noch weiter zu reduzieren ohne Zugeständnisse bei Komfort und Sicherheit machen zu müssen.

Gelöst wird die Aufgabe hinsichtlich der Anordnung durch die kennzeichnenden Merkmale des Anspruchs 1 und hinsichtlich des Verfahrens durch die kennzeichnenden Merkmale des Anspruchs 2, vorteilhafte Ausgestaltungen sind in den abhängigen Ansprüchen gekennzeichnet.

Wenn im Vorstehenden und nachfolgend der Zustand des Radarsensors als "aktiv" bezeichnet ist, soll darunter verstanden werden, dass der Radarsensor in diesem Zustand Radarstrahlen aussendet, wird hingegen der Zustand des Radarsensors als "inaktiv" öder der Radarsensor als "deaktiviert" bezeichnet, bedeutet dies, dass der Radarsensor in diesem Zustand keine Radarstrahlen aussendet. Dieser "inaktive" Zustand bedeutet nicht zwangsläufig, dass der Radarsensor komplett abgeschaltet ist, es können vielmehr steuerungstechnische Aufgaben vom Radarsensor übernommen werden, wenn dies sein konstruktiver Aufbau vorsieht. Mit anderen Worten, wenn im Rahmen dieser Ausführungen in sprachlicher Vereinfachung von einem "abgeschalteten" oder "inaktiven" Radarsensor die Rede ist, bedeutet dies lediglich, dass der Radarsensor oder genauer gesagt dessen sendeseitiger Hochfrequenzteil keine Radarstrahlen aussendet.

Bei der Lösung der Aufgabe wird von einem Kraftfahrzeug insbesondere Nutzfahrzeug mit wenigstens einem Steuergerät ausgegangen, wobei auf dem Steuergerät programmgestützt wenigstens ein Fahrerassistenzsystem zur Ausführung kommt, das Abstands- und/oder Geschwindigkeitsdaten von einem Radarsensor verwendet, die das Steuergerät von dem mit diesem verbundenen Radarsensor übernimmt und wobei das Steuergerät die Eigengeschwindigkeit des Kraftfahrzeugs zur Veränderung des Schaltzustandes des Radarsensors nutzt.

Zur vorteilhaften Minimierung der Einschaltzeiten zumindest der Sendeeinheit des Radarsensors, beziehungsweise der Sendeeinheit des Radarsensors, ist erfindungsgemäß vorgesehen, dass das Steuergerät über Geber weitere Zustandsdaten des Kraftfahrzeugs zyklisch übernimmt und vorhält. Hinsichtlich der Zustandsdaten sind Bedingungen im Steuergerät vorgegeben, unter denen der Schaltzustand "Radarsensor aktiv" beziehungsweise "Radarsensor inaktiv" aufrechterhalten oder hergestellt wird. Hierzu werden in einer ersten Routine die Zustandsdaten zyklisch ermittelt und vorgehalten und es wird in einer zweiten Routine überprüft, welche der vorgegebenen Bedingungen vorliegen und sodann der zugehörige Schaltzustand des Radarsensors aufrechterhalten oder hergestellt.

Bei den weiteren Zustandsdaten handelt es sich erfindungsgemäß um den Betätigungszustand der Feststellbremse, den Betätigungszustand der Betriebsbremse, den Ausführungszustand des wenigstens einen Fahrerassistenzsystems, die Gaspedalstellung, den Betriebszustand des Motors und das Vorhandensein eines Diagnosebefehls für den Radarsensor oder das den Radarsensor verwendende wenigstens eine Fahrerassistenzsystem. Das Steuergerät durchläuft zyklisch programmgestützt einen Steuerungsablauf, bei dem abhängig von den Zustandsdaten, einschließlich der Eigengeschwindigkeit des Kraftfahrzeugs, bestimmte Schältzustände des Radarsensors aufrechterhalten oder hergestellt werden.

Abhängig von den Zustandsdaten werden vom Steuergerät folgende Schaltzustände des Radarsensors hergestellt:
Wenn
   - die Feststellbremse aktiviert ist und/ oder
   - die Betriebsbremse aktiviert ist und gleichzeitig die Eigengeschwindigkeit null ist und/oder
   - das wenigstens eine Fahrerassistenzsystem einen aktiven Fehler zeigt und der Zustand des Radarsensors inaktiv ist, belässt das Steuergerät diesen inaktiv und dann wenn der Zustand des Radarsensors aktiv ist, schaltet das Steuergerät diesem von seinem aktiven in seinen inaktiven Zustand.
Wenn
   - wenigstens ein Fahrerassistenzsystem aktiv ist, das auch im Stillstand aktiv bleibt und/oder
   - ein Notbremssystem vorgesehen ist und eine Notbremsung von einem Fahrerassistenzsystem ausgelöst wurde und das Fahrzeug sich nicht in einem vom Fahrer überwachten Zustand befindet, insbesondere dass die Betriebsbremse nicht betätigt ist und/ oder dass die Feststellbremse nicht betätigt ist und/ oder das die Notbremsung auslösende Fahrerassistenzsystem trotz Stillstand des Kraftfahrzeugs noch aktiv ist,
   belässt das Steuergerät den Radarsensor in seinem aktiven Zustand, auch wenn sich das Kraftfahrzeug im Stillstand befindet.
Wenn
   - das Gaspedal betätigt ist und/ oder weder die Feststellbremse noch die Betriebsbremse betätigt ist und die Eigengeschwindigkeit des Kraftfahrzeugs größer als 0 km/h ist und wenn der Antriebsmotor des Kraftfahrzeugs läuft oder
   - ein Diagnosebefehl zu Überprüfung des wenigstens einen Fahrerassistenzsystems und/ oder des Radarsensors vorhanden ist
   und der Zustand des Radarsensors aktiv ist, belässt das Steuergerät diesen aktiv und dann wenn der Zustand des Radarsensors inaktiv ist, schaltet das Steuergerät diesen in seinen aktiven Zustand.

Wobei der Radarsensor in seinem inaktiven Zustand keine Radarstrahlen aussendet.

Das Verfahren zum Betreiben eines Radarsensors in einem Kraftfahrzeug der vorstehend genannten Art sieht Vor, dass das Steuergerät erfindungsgemäß in einer ersten Routine zyklisch über mit ihm direkt oder indirekt verbundene Geber die Zustandsdaten des Kraftfahrzeugs abfragt und zwischenspeichert. Bei diesen Zustandsdaten handelt es sich erfindungsgemäß um den Betätigungszustand der Feststellbremse, den Betätigungszustand der Betriebsbremse, den Ausführungszustand des wenigstens einen Fahrerassistenzsystems, die Gaspedalstellung, den Betriebszustand des Motors, die Eigengeschwindigkeit des Kraftfahrzeugs und das Vorhandensein eines Diagnosebefehls für den Radarsensor oder das den Radarsensor verwendende wenigstens eine Fahrerassistenzsystem.

In einer zweiten Routine wird in einer ersten Abfrage überprüft, ob die Eigengeschwindigkeit 0 Km/h ist und ob ein Fahrerassistenzsystem noch aktiv ist. Wenn dies zutrifft, wird der Radarsensor aktiv gehalten oder aktiv geschaltet und dann mit der ersten Abfrage fortgefahren,

Wenn diese erste Abfrage nicht zutrifft, wird in einer zweiten Abfrage überprüft, ob alle Fahrerassistenzsysteme, die Daten des Radarsensors benutzenden, im Zustand "Fehler" sind. Wenn diese zweite Abfrage zutrifft, wird der Radarsensor inaktiv gehalten oder inaktiv geschaltet und dann mit der ersten Abfrage fortgefahren.

Wenn diese zweite Abfrage nicht zutrifft, wird in einer dritten Abfrage überprüft, ob ein Befehl für eine Wartungsdiagnose zur Überprüfung des wenigstens einen Fahrerassistenzsystems und/ oder des Radarsensors vorliegt. Wenn dies zutrifft, wird der Radarsensor aktiv gehalten oder aktiv geschaltet und dann mit der ersten Abfrage fortgefahren.

Wenn diese dritte Abfrage nicht zutrifft, wird in einer vierten Abfrage überprüft, ob der Antriebsmotor läuft. Wenn dies nicht zutrifft, wird der Radarsensor inaktiv gehalten oder inaktiv geschaltet und dann mit der ersten Abfrage fortgefahren.

Wenn diese vierte Abfrage zutrifft, wird in einer fünften Abfrage überprüft, ob die Feststellbremse aktiviert ist und wenn dies zutrifft, der Radarsensor inaktiv gehalten oder inaktiv geschaltet und dann mit der ersten Abfrage fortgefahren.

Wenn diese fünfte Abfrage nicht zutrifft, wird in einer sechsten Abfrage überprüft, ob die Eigengeschwindigkeit des Kraftfahrzeugs 0 Km/h ist und die Betriebsbremse aktiviert ist und wenn dies zutrifft, wird der Radarsensor inaktiv gehalten oder inaktiv geschaltet und dann mit der ersten Abfrage fortgefahren.

Wenn diese sechste Abfrage nicht zutrifft, wird in einer siebten Abfrage überprüft, ob die Eigengeschwindigkeit größer 0 Km/h ist und wenn dies zutrifft, wird der Radarsensor aktiv gehalten oder aktiv geschaltet und dann mit der ersten Abfrage fortgefahren.

Wenn diese siebte Abfrage nicht zutrifft, wird mit der ersten Abfrage fortgefahren.

Mit den vorstehend beschriebenen Verfahren lässt sich die Einschaltzeit des Radarsensors bzw. der Sendeeinheit des Radarsensors vorteilhaft minimeren, ohne dass eine Beeinträchtigung der Sicherheit oder des Komforts gegeben ist.

Das wenigstens eine Fahrerassistenzsystem kann dabei vorteilhaft ein Notbremssystem ein Adaptive Cruise Control System oder ein Adaptive Cruise Control Stop&Go System sein.

Sind mehrere die Radardaten des Radarsensors verarbeitende Fahrerassistenzsysteme in einem Kraftfahrzeug vorhanden, so ist es vorteilhaft, für jedes dieser Fahrerassistenzsysteme vor der zweiten Abfrage der zweiten Routine eine weiter Abfrage analog der ersten Abfrage einzufügen und erst nach dem negativ Durchlaufen aller derartigen Abfragen mit der zweiten Abfrage fortzufahren.

In weiterer vorteilhafter Ausgestaltung des Verfahrens kann der ersten Abfrage eine Abfrage zum Justagezustand des Radarsensors vorgeschaltet sein, in der das Steuergerät überprüft, ob eine Information über eine erfolgreiche Justage gespeichert ist. Wenn dies zutrifft, fährt das Steuergerät mit der ersten Abfrage fort. Wenn dies nicht zutrifft, gibt das Steuergerät eine Fehlermeldung an den Kraftfahrzeugführer und blockiert alle Fahrerassistenzsysteme die die Daten des Radarsensors verwenden.

Die Abfrage des Justagezustandes der Radarsensors erfolgt vorteilhaft nur einmal nach jedem Fahrzeugstart.

Es kann weiter von Vorteil sein, wenn der ersten Abfrage eine Abfrage zum Funktionszustand des Radarsensors vorgeschaltet ist, in der das Steuergerät überprüft, ob eine Information über eine erfolgreiche Funktionsprüfung gespeichert ist. Wenn dies zutrifft, fährt das Steuergerät mit der ersten Abfrage fort. Wenn dies nicht zutrifft, gibt das Steuergerät eine Fehlermeldung an den Kraftfahrzeugführer und blockiert alle Fahrerassistenzsysteme, die die Daten des Radarsensors verwenden.

Die Funktionsprüfung des Radarsensors kann vorteilhaft im Fahrbetrieb wiederholt durchgeführt und eine entsprechende Information über den Funktionszustand in einen Speicher eingespeichert werden. Bewerkstelligt wird dies z.B. dadurch, dass der Radarsensor im Fahrbetrieb auf das Detektieren von Objekten überwacht wird. Werden Objekte detektiert, kann die Funktionsfähigkeit als gegeben angenommen werden. Werden keine Objekte detektiert, liegt ein Fehlerfall vor.

Im ersten Fall, also bei grundsätzlicher Funktionsfähigkeit, kann sich ein Verfahren anschließen, das eventuelle Dejustagen feststellt. Ein derartiges Verfahren ist z.B. aus der DE 199 64 020 A1 bekannt, es wird hiermit darauf Bezug genommen.

Die vorstehend beschriebene Anordnung sowie das beschriebene Verfahren lassen sich vorteilhaft allgemein in Kraftfahrzeugen insbesondere auch in Nutzfahrzeugen einsetzen.

Weitere Ausgestaltungen und Vorteile der Erfindung werden nachfolgend anhand der Zeichnungen näher erläutert, es zeigen:
- Fig. 1: Eine Prinzipdarstellung einer Anordnung zur Minimierung der Einschaltzeit eines Radarsensors bzw. dessen Sendeeinheit im Fahrbetrieb eines Kraftfahrzeugs
- Fig. 2: Eine Darstellung des Verfahrens zur Minimierung der Einschaltzeit eines Radarsensors bzw. dessen Sendeeinheit im Fahrbetrieb eines Kraftfahrzeugs

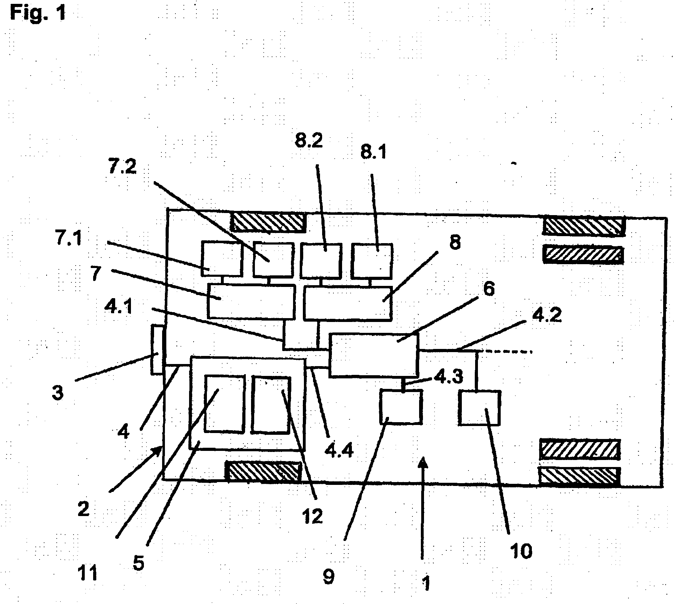

Die Darstellung in Fig. 1 zeigt in stark vereinfachter schematischer Darstellung ein Kraftfahrzeug 1, dessen Fahrzeugsteuerung durch ein CAN-Bussystem gebildet ist. Derartige CAN-Bussysteme bestehen aus mehreren Steuerkomponenten, die über eigene Prozessorleistung verfügen, also als selbstständige Recheneinheiten anzusehen sind. Verbunden sind diese Steuerkomponenten über CAN-Bussystem-Verbindungen entweder direkt oder über sogenannte "Gateway und Diagnoseinterfaceeinheiten", die die Aufgabe haben, unterschiedlich schnelle Teilbussysteme so zu verbinden, dass global benötigte Informationen allen Steuerkomponenten zur Verfügung stehen. Derartige CAN-Bussystem sind weit verbreitet, so dass sich eine detaillierte Beschreibung der Busprotokolle und Datenaustauschmechanismen erübrigt. Das nachfolgend in Verbindung mit der Fig. 1 beschriebene Beispiel bedient sich eines solchen CAN-Bussystems, ohne dass dies einschränkend zu verstehen sein soll. Im Extrem wäre es genauso möglich, statt eines CAN-Bussystem eine zentrale Recheneinheit zu verwenden, die alle Steuerabläufe übernimmt.

An der Front 2 des Kraftfahrzeugs 1 ist ein Radarsensor 3 angebracht, der über eine CAN-Bussystem-Verbindung 4 mit einem als Abstandssteuerung ausgeführten Steuergerät 5 verbunden ist. Bei dem besagten Steuergerät 5 handelt es sich im gewählten Beispiel um ein Computersystem, auf dem ein ACC Stop&Go Fahrerassistenzsystem implementiert ist. Das Steuergerät 5 ist seinerseits über eine CAN-Bussystem-Verbindung 4.4 mit einer Gateway- und Diagnoseinterfaceeinheit 6 verbunden, die ihrerseits über eine CAN-Bussystem-Verbindung 4.1 mit einer Bremsen-Steuereinheit 7 und einer Motorsteuereinheit 8 verbunden ist. Die Bremsen-Steuereinheit 7, die ein Notbremssystem enthält, weist darüber hinaus einen Betriebsbremsen-Sensor 7.1 auf, der den Betätigungszustand der Betriebsbremse feststellt und einen Feststellbremsen-Sensor 7.2 der den Betriebszustand der Feststellbremse ermittelt. Die angesprochene Motorsteuereinheit 8 ermittelt über einen entsprechenden Gaspedal-Sensor 8.1 die Stellung des Gaspedals und aus einem Zustandsspeicher 8.2 den Einschaltzustand des Motors.

Über weitere CAN-Bussystem-Verbindungen 4.3, 4.2 ist die Gateway- und Diagnoseinterfaceeinheit 6 mit einem Diagnosestecker 9 und mit einer Getriebesteuereinheit 10 verbunden. Die Getriebesteuereinheit 10 liefert die Information über die augenblickliche Geschwindigkeit des Kraftfahrzeugs, der Diagnosestecker 9 kann mit einer entsprechenden Steckverbindung an ein Diagnosegerät (nicht dargestellt) angeschlossen werden, das dann gegebenenfalls ein Signal liefert, wenn eine Diagnose des Radarsensors 3 durchgeführt werden soll oder eine Diagnose eines Fahrerassistenzsystems, das die Daten des Radarsensors 3 benutzt.

Um die Einschaltzeiten des Radarsensors 3 bzw. dessen Sendeeinheit (nicht dargestellt) zu minimieren ist nun vorgesehen, dass mittels einer in das Steuergerät 5 implementierten ersten Routine 11 eine Reihe von Zustandsdaten des Kraftfahrzeugs ermittelt und in einem Speicher (nicht dargestellt) vorgehalten werden. Bei diesen Zustandsdaten handelt es sich wenigstens um den Betätigungszustand der Feststellbremse, den Betätigungszustand der Betriebsbremse, den Ausführungszustand des wenigstens einen Fahrerassistenzsystems, die Gaspedalstellung, den Betriebszustand des Motors, die Eigengeschwindigkeit des Kraftfahrzeugs und das Vorhandensein eines Diagnosebefehls für den Radarsensor 3 oder das den Radarsensor 3 verwendende wenigstens eine Fahrerassistenzsystem. Diese Zustandsdaten werden über das vorstehend beschriebene CAN-Bussystem zyklisch abgefragt, so dass in dem Steuergerät 5 immer die aktuellen Zustandsdaten verfügbar sind. In Abhängigkeit von den vorstehend genannten Zustandsdaten steuert das Steuergerät 5 mittels einer zweiten Steuerroutine 12, die im Steuergerät 5 implementiert ist, den Einschaltzustand des Radarsensors 3.

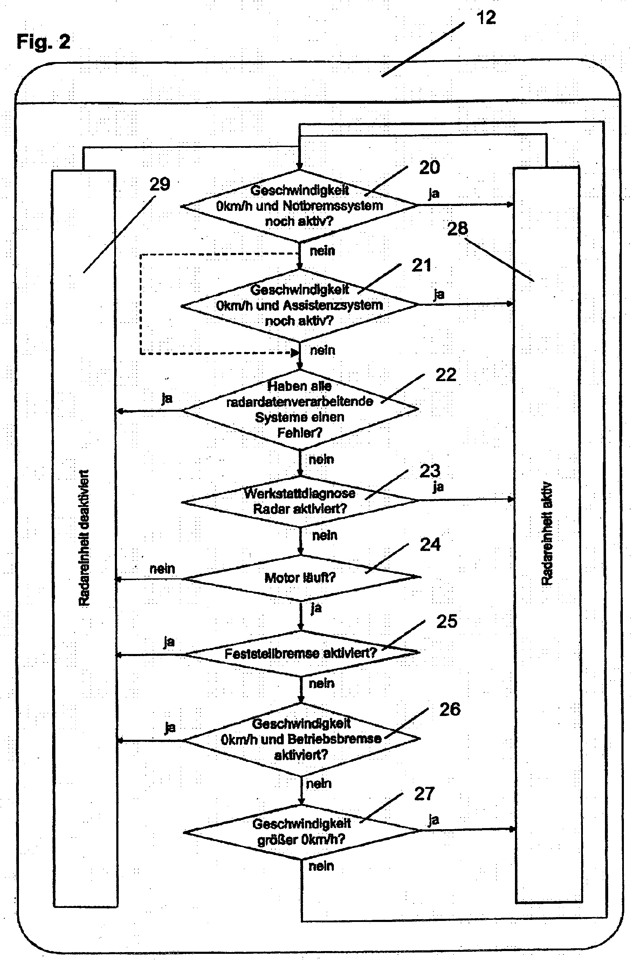

Wie bereits oben ausgeführt, ist der Einschaltzustand des Radarsensors 3 an eine Reihe von Bedingungen geknüpft. Die Steuerroutine 12 hat die Aufgabe zu ermitteln, ob diese besagten Bedingungen erfüllt sind oder nicht. Im Folgenden wird die Steuerroutine 12 anhand des in Fig. 2 dargestellten Flussdiagramms näher erläutert. Es wird dabei davon ausgegangen, dass die oben erwähnten aktuellen Zustandsdaten in dem Steuergerät 5 vorliegen.

In einer ersten Abfrage 20 überprüft das Steuergerät 5, ob die Eigengeschwindigkeit 0 Km/h ist und ob das z.B. das Notbremssystem enthaltende Fahrerassistenzsystem, noch aktiv ist. Wenn dies zutrifft, wird der Radarsensor 3 im Steuerschritt 28 aktiv gehalten oder aktiv geschaltet und dann mit der ersten Abfrage 20 fortgefahren.

Wenn diese erste Abfrage 20 nicht zutrifft und es ist, wie in Fig. 2 gezeigt, ein weiteres die Radardaten des Radarsensors 3 verarbeitendes Fahrerassistenzsystem vorhanden, wird in einer weiteren Abfrage 21geprüft, ob die Eigengeschwindigkeit 0 Km/h ist und ob das weitere Fahrerassistenzsystem, noch aktiv ist. Wenn dies zutrifft, wird der Radarsensor 3 im Steuerschritt 28 aktiv gehalten oder aktiv geschaltet und dann mit der ersten Abfrage 20 fortgefahren.

Ist das weitere die Radardaten des Radarsensors 3 verarbeitendes Fahrerassistenzsystem abweichend zum gezeigten Beispiel nicht vorhanden, entfällt die weitere Abfrage 21 und das Verfahren folgt dem in der Fig. 2 gestrichelt eingezeichneten Pfeil. Sind abweichend zum Beispiel mehrere solcher die Radardaten des Radarsensors 3 verarbeitender Fahrerassistenzsysteme vorhanden, kann für jedes dieser Fahrerassistenzsysteme eine gesonderte Abfrage erfolgen.

Wenn diese weitere Abfrage 21 nicht zutrifft, wird in einer zweiten Abfrage 22 durch das Steuergerät 5 überprüft, ob alle Fahrerassistenzsysteme, die Daten des Radarsensors 3 benutzenden, im Zustand "Fehler" sind. Wenn diese zweite Abfrage 22 zutrifft, wird der Radarsensor 3 im Steuerschritt 29 inaktiv gehalten oder inaktiv geschaltet und dann mit der ersten Abfrage 20 fortgefahren.

Wenn diese zweite Abfrage 22 nicht zutrifft, wird in einer dritten Abfrage 23 durch das Steuergerät 5 überprüft, ob ein Befehl für eine Wartungsdiagnose zur Überprüfung des wenigstens einen Fahrerassistenzsystems und/ oder des Radarsensors 3 vorliegt. Wenn dies zutrifft, wird der Radarsensor 3 im Steuerschritt 28 aktiv gehalten oder aktiv geschaltet und dann mit der ersten Abfrage 20 fortgefahren.

Wenn diese dritte Abfrage 23 nicht zutrifft, wird in einer vierten Abfrage 24 durch das Steuergerät 5 überprüft, ob der Antriebsmotor läuft. Wenn dies nicht zutrifft, wird der Radarsensor 3 im Steuerschritt 29 inaktiv gehalten oder inaktiv geschaltet und dann mit der ersten Abfrage 20 fortgefahren.

Wenn diese vierte Abfrage 24 zutrifft, wird in einer fünften Abfrage 25 durch das Steuergerät 5 überprüft, ob die Feststellbremse aktiviert ist und wenn dies zutrifft, der Radarsensor 3 im Steuerschritt 29 inaktiv gehalten oder inaktiv geschaltet und dann mit der ersten Abfrage 20 fortgefahren.

Wenn diese fünfte Abfrage 25 nicht zutrifft, wird in einer sechsten Abfrage 26 durch das Steuergerät 5 überprüft, ob die Eigengeschwindigkeit des Kraftfahrzeugs 0 Km/h ist und die Betriebsbremse aktiviert ist und wenn dies zutrifft, wird der Radarsensor 3 im Steuerschritt 29 inaktiv gehalten oder inaktiv geschaltet und dann mit der ersten Abfrage fortgefahren.

Wenn diese sechste Abfrage 26 nicht zutrifft, wird in einer siebten Abfrage 27 durch das Steuergerät 5 überprüft, ob die Eigengeschwindigkeit größer 0 Km/h ist und wenn dies zutrifft, wird der Radarsensor 3 im Steuerschritt 28 aktiv gehalten oder aktiv geschaltet und dann mit der ersten Abfrage 20 fortgefahren.

Wenn diese siebte Abfrage 27 nicht zutrifft, wird mit der ersten Abfrage 20 fortgefahren.

Um sicherzustellen, dass der in dem Kraftfahrzeug 1 eingebaute Radarsensor 3 ordnungsgemäß justiert wurde, kann der ersten Abfrage 20 eine entsprechende Abfrage vorgeschaltet sein. Dazu ist es erforderlich, dass nach erfolgter Justierung des Radarsensors 3, z.B. in der Produktion oder während einer Wartung des Kraftfahrzeugs, in das Steuergerät 5 eine entsprechende Information gespeichert wird, die Auskunft über den Justagezustand des Radarsensors 3 gibt. Wird von dem Steuergerät 5 eine erfolgreiche Justage festgestellt, fährt dieses mit Abfrage 20 fort. So ist sichergestellt, dass die Abfrage nach einer erfolgreichen Justage nach jedem Starten des Kraftfahrzeugs nur einmal erfolgt. Verläuft die Abfrage nach dem Justagezustandes des Radarsensors negativ, kann einerseits eine Warnmeldung an den Fahrzeugführer gegeben werden und andererseits können alle Fahrerassistenzsysteme, die die Radardaten benutzen, in den Fehlerzustand geschaltet werden.

Wird in der Produktion oder während einer Wartung des Kraftfahrzeugs eine vollständige Funktionskontrolle des Radarsensors durchgeführt, kann selbstverständlich analog zum vorstehend zur Justage Ausgeführten verfahren werden.

Denkbar ist es auch, im Fahrbetrieb eine ständige Funktionskontrolle durchzuführen. In diesem Fall wären die Funktionsfähigkeit des Radarsensors 3 im Rahmen der ersten Routine 11 festzustellen und eine entsprechende Information im Steuergerät 5 im Rahmen der Zustandsdaten zu speichern. In der zweiten Routine 12 würde die Abfrage nach der Funktionsfähigkeit des Radarsensors 3 dann an den Anfang gestellt.

Selbstverständlich besteht die Möglichkeit, bei der im Beispiel beschriebenen zweiten Routine Abfragen in ihrer Reihenfolge auszutauschen ohne dass die Funktionsfähigkeit des Verfahrens darunter leidet, ein solcher Austausch ist dem Fachmann geläufig.

## Patentansprüche

1. Kraftfahrzeug insbesondere Nutzfahrzeug mit wenigstens einem Steuergerät, wobei auf dem Steuergerät programmgestützt wenigstens ein Fahrerassistenzsystem zur Ausführung kommt, wobei dieses wenigstens eine Fahrerassistenzsystem Abstands- und/ oder Geschwindigkeitsdaten von einem Radarsensor verwendet, die das Steuergerät von dem mit diesem verbundenen Radarsensor übernimmt und wobei das Steuergerät die Eigengeschwindigkeit des Kraftfahrzeugs zur Veränderung des Schaltzustandes des Radarsensors nutzt, **dadurch gekennzeichnet,**
**dass** zur Minimierung der Einschaltzeiten zumindest der Sendeeinheit des Radarsensors (3) das Steuergerät (5) über mit ihm direkt oder indirekt verbundene Geber weitere Zustandsdaten des Kraftfahrzeugs (1) zyklisch übernimmt und vorhält und hinsichtlich der Zustandsdaten im Steuergerät (5) Bedingungen vorgegeben sind, unter denen der Schaltzustand "Radarsensor aktiv" oder "Radarsensor inaktiv" aufrechterhatten oder hergestellt wird und in einer ersten Routine (11) die Zustandsdaten zyklisch ermittelt und vorgehalten werden und in einer zweiten Routine (12)fortlaufend überprüft wird, welche der vorgegebenen Bedingungen vorliegen und sodann der zugehörige Schaltzustand des Radarsensors (3) aufrechterhalten oder hergestellt wird und wobei der Radarsensor (3) in seinem inaktiven Zustand keine Radarstrahlen aussendet,
**dass** es sich bei den Zustandsdaten um den Betätigungszustand der Feststellbremse, den Betätigungszustand der Betriebsbremse, den Ausführungszustand des wenigstens einen Fahrerassistenzsystems, die Gaspedalstellung, den Betriebszustand des Motors, die Eigengeschwindigkeit des Kraftfahrzeugs (1) und das Vorhandensein eines Diagnosebefehls für den Radarsensor (3) oder das den Radarsensor (3) verwendende wenigstens eine Fahrerassistenzsystem handelt und dass das Steuergerät (5) programmgestützt einen Steuerungsablauf zyklisch durchläuft, bei dem es den Radarsensor (3), dann wenn
- die Feststellbremse aktiviert ist und/ oder
- die Betriebsbremse aktiviert ist und gleichzeitig die Eigengeschwindigkeit null ist und/oder
- das wenigstens eine Fahrerassistenzsystem einen aktiven Fehler zeigt
und der Zustand des Radarsensors (3) inaktiv ist, diesen inaktiv belässt und dann wenn der Zustand des Radarsensors (3) aktiv ist, von seinen aktiven in seinen inaktiven Zustand schaltet und dass das Steuergerät (5) den Radarsensor (3) dann wenn
- wenigstens ein Fahrerassistenzsystem aktiv ist, das auch im Stillstand aktiv bleibt und/oder
- ein Notbremssystem vorgesehen ist und eine Notbremsung von einem Fahrerassistenzsystem ausgelöst wurde und das Fahrzeug sich nicht in einem vom Fahrer überwachten Zustand befindet, bei dem die Betriebsbremse nicht betätigt ist und/ oder bei dem die Feststellbremse nicht betätigt ist und/oder bei dem das die Notbremsung auslösende Fahrerassistenzsystem trotz Stillstand des Kraftfahrzeugs (1) noch aktiv ist,
in seinem aktiven Zustand belässt auch wenn sich das Kraftfahrzeug (1) im Stillstand befindet und dass das Steuergerät (5) den Radarsensor (3) dann wenn
- das Gaspedal betätigt und/ oder weder die Feststellbremse noch die Betriebsbremse betätigt ist und die Eigengeschwindigkeit des Kraftfahrzeugs (1) größer als 0 km/h ist und wenn der Antriebsmotor des Kraftfahrzeugs (1) läuft oder
- ein Diagnosebefehl zu Überprüfung des wenigstens einen Fahrerassistenzsystems und/ oder des Radarsensors (3) vorhanden ist
und der Zustand des Radarsensors (3) aktiv ist, diesen aktiv belässt und dann wenn der Zustand des Radarsensors (3) inaktiv ist, diesen in seinen aktiven Zustand schaltet und dass der Radarsensor (3) in seinem inaktiven Zustand keine Radarstrahlen aussendet.

2. Verfahren zum Betreiben eines Radarsensors (3) in einem Kraftfahrzeug (1) mit wenigstens einem Steuergerät (5), wobei auf dem Steuergerät (5) programmgestützt wenigstens ein Fahrerassistenzsystem zur Ausführung kommt, wobei dieses wenigstens eine Fahrerassistenzsystem Abstands- und/ oder Geschwindigkeitsdaten von dem Radarsensor (3) verwendet, die das Steuergerät (5) von diesem übernimmt und wobei das Steuergerät (5) die Eigengeschwindigkeit des Kraftfahrzeugs zur Veränderung des Schaltzustandes des Radarsensors nutzt, **dadurch gekennzeichnet, dass**
- das Steuergerät (5) in einer ersten Routine (11) zyklisch über mit ihm verbundene Geber Zustandsdaten des Kraftfahrzeugs (1) abfragt und zwischenspeichert, wobei es sich bei diesen Zustandsdaten um den Betätigungszustand der Feststellbremse, den Betätigungszustand der Betriebsbremse, den Ausführungszustand des wenigstens einen Fahrerassistenzsystems, die Gaspedalstellung, den Betriebszustand des Motors, die Eigengeschwindigkeit des Kraftfahrzeugs (1) und das Vorhandensein eines Diagnosebefehls für den Radarsensor (3) oder das den Radarsensor (3) verwendende wenigstens eine Fahrerassistenzsystem handelt,
- das Steuergerät (5) in einer zweiten Routine (12) in einer ersten Abfrage (20) überprüft, ob die Eigengeschwindigkeit 0 Km/h ist und ob das wenigstens eine die Radardaten verwendendes Fahrerassistenzsystem noch aktiv ist und wenn dies zutrifft, den Radarsensor (3) im Steuerschritt (28) aktiv hält oder aktiv schaltet und dann mit der ersten Abfrage (20) fortfährt,
- das Steuergerät (5), dann wenn dies nicht zutrifft, in einer zweiten Abfrage (22) überprüft, ob alle Fahrerassistenzsysteme, die Daten des Radarsensors (3) benutzenden, im Zustand "Fehler" sind und wenn dies zutrifft, den Radarsensor (3) im Steuerschritt (29) inaktiv hält, und damit keine Radarstrahlen anssendet, oder inaktiv schaltet und dann mit der ersten Abfrage (20) fortfährt,
- das Steuergerät (5), dann wenn dies nicht zutrifft, in einer dritten Abfrage (23) überprüft, ob ein Befehl für eine Wartungsdiagnose zur Überprüfung des wenigstens einen Fahrerassistenzsystems und/ oder des Radarsensors (3) vorliegt und wenn dies zutrifft, den Radarsensor (3) im Steuerschritt (28) aktiv hält oder aktiv schaltet und dann mit der ersten Abfrage(20)förtfährt,
- das Steuergerät (5), dann wenn dies nicht zutrifft, in einer vierten Abfrage (24) überprüft, ob der Antriebsmotor läuft und wenn dies nicht zutrifft, den Radarsensor (3) im Steuerschritt (29) inaktiv hält oder inaktiv schaltet und dann mit der ersten Abfrage (20) fortfährt,
- das Steuergerät (5), dann wenn dies zutrifft, in einer fünften Abfrage (25) überprüft, ob die Feststellbremse aktiviert ist und wenn dies zutrifft, den Radarsensor (3) im Steuerschritt (29) inaktiv hält oder inaktiv schaltet und dann mit der ersten Abfrage (20) fortfährt,
- das Steuergerät (5), dann wenn dies nicht zutrifft, in einer sechsten Abfrage (26) überprüft, ob die Eigengeschwindigkeit 0 Km/h ist und die Betriebsbremse aktiviert ist und wenn dies zutrifft, den Radarsensor (3) im Steuerschritt (29) inaktiv hält oder inaktiv schaltet und dann mit der ersten Abfrage (20) fortfährt,
- das Steuergerät (5), dann wenn dies nicht zutrifft, in einer siebten Abfrage (27) überprüft, ob die Eigengeschwindigkeit größer 0 Km/h ist und wenn dies zutrifft, den Radarsensor (3) im Steuerschritt (28) aktiv hält oder aktiv schaltet und dann mit der ersten Abfrage (20) fortfährt und wenn dies nicht zutrifft, mit der ersten Abfrage (20) fortfährt.

3. Verfahren nach Anspruch 2, **dadurch gekennzeichnet, dass** ein weiteres die Radardaten des Radarsensors (3) verarbeitendes Fahrerassistenzsystem vorgesehen ist, und vor der zweiten Abfrage (22) eine weitere Abfrage (21) eingeschoben ist, in der das Steuergerät (5) überprüft ob die Eigengeschwindigkeit 0 Km/h ist und ob das die Radardaten verwendende weitere Fahrerassistenzsystem noch aktiv ist und wenn dies zutrifft, den Radarsensor (3) im Steuerschritt (28) aktiv hält oder aktiv schaltet und dann mit der ersten Abfrage (20) fortfährt, und wenn dies nicht zutrifft, mit der zweiten Abfrage (22) fortfährt.

4. Verfahren nach Anspruch 3, **dadurch gekennzeichnet, dass** für jedes vorhandene die Radardaten des Radarsensors (3) verarbeitende Fahrerassistenzsystem eine solche Abfrage erfolgt und nach negativem Durchlaufen aller Abfragen das Steuergerät (5) mit der zweiten Abfrage (22) fortfährt.

5. Verfahren nach Anspruch 2, **dadurch gekennzeichnet, dass** das wenigstens eine Fahrerassistenzsystem ein Notbremssystem enthält.

6. Verfahren nach Anspruch 2, **dadurch gekennzeichnet, dass** das wenigstens eine Fahrerassistenzsystem ein Adaptive Cruise Control System enthält.

7. Verfahren nach Anspruch 2, **dadurch gekennzeichnet, dass** das wenigstens eine Fahrerassistenzsystem ein Adaptive Cruise Control Stop&Go System enthält.

8. Verfahren nach Anspruch 2, **dadurch gekennzeichnet, dass** der ersten Abfrage (20) eine Abfrage zum Justagezustand des Radarsensors (3) vorgeschaltet ist, in der das Steuergerät (5) überprüft, ob eine Information über eine erfolgreiche Justage gespeichert ist und wenn dies zutrifft, das Steuergerät (5) mit der ersten Abfrage (20) fortfährt und wenn dies nicht zutrifft, eine Fehlermeldung an den Kraftfahrzeugführer ausgibt.

9. Verfahren nach Anspruch 8, **dadurch gekennzeichnet, dass** die Abfrage zum Justagezustand des Radarsensors (3) nur einmal nach jedem Fahrzeugstart erfolgt.

10. Verfahren nach Anspruch 2, **dadurch gekennzeichnet, dass** der ersten Abfrage (20) eine Abfrage zum Funktionszustand des Radarsensors (3) vorgeschaltet ist, in der das Steuergerät (5) überprüft, ob eine Information über eine erfolgreiche Funktionsprüfung gespeichert ist und wenn dies zutrifft, das Steuergerät (5) mit der ersten Abfrage (20) fortfährt und wenn dies nicht zutrifft, eine Fehlermeldung an den Kraftfahrzeugführer ausgibt.

11. Verfahren nach Anspruch 10, **dadurch gekennzeichnet, dass** die Funktionsprüfung im Fahrbetrieb wiederholt durchgeführt und eine entsprechende Information über den Funktionszustand in einen Speicher des Steuergerätes (5) eingespeichert wird.

## Claims

1. Motor vehicle, in particular utility vehicle, having at least one control unit, wherein at least one driver assistance system is implemented in a program-assisted fashion on the control unit, wherein said at least one driver assistance system uses distance data and/or speed data of a radar sensor which the control unit receives from the radar sensor which is connected thereto, and wherein the control unit uses the motor vehicle's own speed to change the switched state of the radar sensor, **characterized**
**in that**, in order to minimize the switch-on times of at least the transmitter unit of the radar sensor (3), the control unit (5) cyclically receives further state data of the motor vehicle (1) via encoders which are directly or indirectly connected to said control unit (5), and holds said data, and conditions according to which the switched state "radar sensor active" or "radar sensor inactive" is maintained or brought about are predefined with respect to the state data in the control unit (5), and in a first routine (11) the state data are determined cyclically and held, and in a second routine (12) there is continuous checking as to which of the predefined conditions are met, and the associated switched state of the radar sensor (3) is then maintained or brought about, and wherein in its inactive state the radar sensor (3) does not emit any radar beams,
**in that** the state data comprises the activation state of the parking brake, the activation state of the service brake, the execution state of the at least one driver assistance system, the accelerator pedal position, the operating state of the engine, the motor vehicle's (1) own speed and the presence of a diagnostic command for the radar sensor (3) or the at least one driver assistance system which uses the radar sensor (3), and in that the control unit (5) cyclically runs through, in a program-assisted fashion, a control sequence, in which, when
- the parking brake is activated and/or
- the service brake is activated and at the same time the vehicle's own speed is zero and/or
- the at least one driver assistance system exhibits an active fault and the state of the radar sensor (3) is inactive, said control unit (5) leaves said radar sensor (3) inactive, and when the state of the radar sensor (3) is active it switches from its active state into its inactive state, and in that when
- at least one driver assistance system is active and also remains active in the stationary state and/or
- an emergency brake system is provided and an emergency braking operation has been triggered by a driver assistance system and the vehicle is not in a state which is monitored by the driver and in which the service brake is not activated and/or in which the parking brake is not actuated, and/or in which the driver assistance system which triggers the emergency braking operation is still active despite the motor vehicle (1) being in a stationary state,
the control device (5) leaves the radar sensor (3) in its active state even if the motor vehicle (1) is in the stationary state, and in that when
- the accelerator pedal is activated and/or neither the parking brake nor the service brake is activated and the motor vehicle's (1) own speed is higher than 0 km/h and when the drive motor of the motor vehicle (1) is running or
- a diagnostic command relating to the checking of the at least one driver assistance system and/or of the radar sensor (3) is present
and the state of the radar sensor (3) is active, said control unit (5) leaves said radar sensor (3) active, and when the state of the radar sensor (3) is inactive it switches said radar sensor (3) into its active state, and in that the radar sensor (3) does not emit any radar beams in its inactive state.

2. Method for operating a radar sensor (3) in a motor vehicle (1) having at least one control unit (5) wherein at least one driver assistance system is implemented in a program-assisted fashion on the control unit, wherein said at least one driver assistance system uses distance data and/or speed data from the radar sensor (3) which the control unit (5) receives from the radar sensor, and wherein the control unit (5) uses the motor vehicle's own speed to change the switched state of the radar sensor, **characterized in that**
- in a first routine (11) the control unit (5) cyclically interrogates state data of the motor vehicle (1) via encoders which are connected to said control unit (5), and buffers said state data, wherein the state data comprises the activation state of the parking brake, the activation state of the service brake, the execution state of the at least one driver assistance system, the position of the accelerator pedal, the operating state of the engine, the motor vehicle's (1) own speed and the presence of a diagnostic command for the radar sensor (3) or the at least one driver assistance system which uses the radar sensor (3),
- in a second routine (12) the control unit (5) checks in a first interrogation (20) whether the vehicle's own speed is 0 km/h and whether the at least one driver assistance system which uses the radar data is still active, and if this is the case in the control step (28) said control unit (5) keeps the radar sensor (3) active or switches it to an active state and then continues with the first interrogation (20),
- when this is not the case, the control unit (5) checks in a second interrogation (22) whether all the driver assistance systems which use data of the radar sensor (3) are in the "fault" state, and if this is the case in the control step (29) said control unit (5) keeps the radar sensor (3) inactive, and therefore does not emit any radar beams, or switches it to an inactive state, and then continues with the first interrogation (20),
- when this is not the case, the control unit (5) checks in a third interrogation (23) whether a command for maintenance diagnostics for the checking of the at least one driver assistance system and/or of the radar sensor (3) is present, and if this is the case, in the control step (28) said control unit (5) keeps the radar sensor (3) active or switches it to an active state and then continues with the first interrogation (20),
- when this is not the case, the control unit (5) checks in a fourth interrogation (24) whether the drive engine is running, and if this is not the case, in the control step (29) said control unit (5) keeps the radar sensor (3) inactive or switches it to an inactive state and then continues with the first interrogation (20),
- where this is the case the control unit (5) checks in a fifth interrogation (25) whether the parking brake is activated, and if this is the case in the control step (29) said control unit (5) keeps the radar sensor (3) inactive or switches it to an inactive state and then continues with the first interrogation (20),
- when this is not the case, the control unit (5) checks in a sixth interrogation (26) whether the vehicle's own speed is 0 km/h and the service brake is activated, and if this is the case, in the control step (29) said control unit (5) keeps the radar sensor (3) inactive or switches it to an inactive state and then continues with the first interrogation (20),
- when this is not the case, the control unit (5) checks in a seventh interrogation (27) whether the vehicle's own speed is higher than 0 km/h, and if this is the case, in the control step (28) said control unit (5) keeps the radar sensor (3) active or switches it to an active state and then continues with the first interrogation (20), and if this is not the case said control unit (5) continues with the first interrogation (20).

3. Method according to Claim 2, **characterized in that** a further driver assistance system which processes the radar data of the radar sensor (3) is provided, and a further interrogation (21) is inserted before the second interrogation (22), in which further interrogation (21) the control unit (5) checks whether the vehicle's own speed is 0 km/h, and whether the further driver assistance system which uses the radar data is still active, and if this is the case, in the control step (28) said control unit (5) keeps the radar sensor (3) active or switches it to an active state and then continues with the first interrogation (20), and if this is not the case said control unit (5) continues with the second interrogation (22).

4. Method according to Claim 3, **characterized in that** such an interrogation takes place for each driver assistance system which is present and which processes the radar data of the radar sensor (3), and after all the interrogations have been run through negatively the control unit (5) continues with the second interrogation (22).

5. Method according to Claim 2, **characterized in that** the at least one driver assistance system contains an emergency brake system.

6. Method according to Claim 2, **characterized in that** the at least one driver assistance system contains an adaptive cruise control system.

7. Method according to Claim 2, **characterized in that** the at least one driver assistance system contains an adaptive cruise control stop & go system.

8. Method according to Claim 2, **characterized in that** the first interrogation (20) is preceded by an interrogation with respect to the adjustment state of the radar sensor (3), in which interrogation the control unit (5) checks whether information about a successful adjustment is stored, and if this is the case the control unit (5) continues with the first interrogation (20), and if this is not the case said control unit (5) outputs a fault message to the motor vehicle driver.

9. Method according to Claim 8, **characterized in that** the interrogation with respect to the adjustment state of the radar sensor (3) takes place only once after each vehicle start.

10. Method according to Claim 2, **characterized in that** the first interrogation (20) is preceded by an interrogation with respect to the functional state of the radar sensor (3), in which interrogation the control unit (5) checks whether information about successful functional checking is stored, and if this is the case the control unit (5) continues with the first interrogation (20), and if this is not the case said control unit (5) outputs a fault message to the motor vehicle driver.

11. Method according to Claim 10, **characterized in that** the functional testing is carried out repeatedly in the driving mode, and corresponding information about the functional state is stored in a memory of the control unit (5).

## Revendications

1. Véhicule automobile, en particulier véhicule utilitaire avec au moins un dispositif de commande, dans lequel au moins un système d'assistance au conducteur est exécuté de manière assistée par programme sur le dispositif de commande, dans lequel cet au moins un système d'assistance au conducteur utilise des données de distance et/ou de vitesse d'un capteur radar que le dispositif de commande reprend du capteur radar relié à celui-ci, et dans lequel le dispositif de commande utilise la vitesse propre du véhicule automobile pour la modification de l'état de commutation du capteur radar, **caractérisé en ce**
**que**, pour minimiser les temps de mise en marche au moins de l'unité d'émission du capteur radar (3), le dispositif de commande (5) reprend de manière cyclique, via des transmetteurs reliés directement ou indirectement avec lui, d'autres données d'état du véhicule automobile (1) et les met à disposition, et qu'en ce qui concerne les données d'état dans le dispositif de commande (5), des conditions sont prescrites selon lesquelles l'état de commutation « capteur de radar actif » ou « capteur radar inactif » est maintenu ou établi, et que dans une première routine (11), les données d'état sont déterminées de manière cyclique et mises à disposition et dans une deuxième routine (12), on vérifie en continu lesquelles des conditions prescrites existent et maintient ou établit aussitôt l'état de commutation associé du capteur radar (3), et dans lequel le capteur radar (3) n'envoie pas de faisceaux radar dans son état inactif,
**qu'**en ce qui concerne les données d'état, il s'agit de l'état d'actionnement du frein de stationnement, de l'état d'actionnement du frein de service, de l'état d'exécution de l'au moins un système d'assistance au conducteur, de la position de la pédale de gaz, de l'état de fonctionnement du moteur, de la vitesse propre du véhicule (1) et de la présence d'une instruction de diagnostic pour le capteur radar (3) ou l'au moins un système d'assistance au conducteur utilisant le capteur radar (3), et que le dispositif de commande (5) répète cycliquement de manière assistée par programme un ordre d'exécution d'instructions où il laisse le capteur radar(3) inactif lorsque
- le frein de stationnement est activé et/ou
- le frein de service est activé et la vitesse propre est simultanément nulle et/ou
- l'au moins un système d'assistance au conducteur montre une erreur active,
et l'état du capteur radar (3) est inactif, et que lorsque l'état du capteur radar (3) est actif, il le commute de son état actif à son état inactif, et que le dispositif de commande (5) laisse le capteur radar (3) dans son état actif lorsque
- au moins un système d'assistance au conducteur est actif, lequel reste également actif à l'arrêt et/ou
- un système de freinage de secours est prévu et un freinage d'urgence a été déclenché par un système d'assistance au conducteur et le véhicule ne se trouve pas dans un état surveillé par le conducteur où le frein de service n'est pas actionné et/ou où le frein de stationnement n'est pas actionné et/ou où le système d'assistance au conducteur déclenchant le freinage d'urgence est encore actif malgré l'arrêt du véhicule automobile (1),
également lorsque le véhicule automobile (1) se trouve à l'arrêt, et que le dispositif de commande (5) laisse le capteur radar (3) actif lorsque
- la pédale de gaz est activée et/ou ni le frein de stationnement, ni le frein de service ne sont actionnés et la vitesse propre du véhicule automobile (1) est supérieure à 0 km/h et lorsque le moteur de traction du véhicule automobile (1) est en marche ou
- une instruction de diagnostic pour la vérification de l'au moins un système d'assistance au conducteur et/ou du capteur radar (3) existe
et l'état du capteur radar (3) est actif, et que lorsque l'état du capteur radar (3) est inactif, il commute celui-ci à son état actif et que dans son état inactif, le capteur radar (3) n'émet pas de faisceaux radar.

2. Procédé pour faire fonctionner un capteur radar (3) dans un véhicule automobile (1) avec au moins un dispositif de commande (5), dans lequel au moins un système d'assistance au conducteur est exécuté de manière assistée par programme sur le dispositif de commande (5), dans lequel cet au moins un système d'assistance au conducteur utilise des données de distance et/ou de vitesse d'un capteur radar (3) que le dispositif de commande (5) reprend de celui-ci, et dans lequel le dispositif de commande (5) utilise la vitesse propre du véhicule automobile pour la modification de l'état de commutation du capteur radar, **caractérisé en ce**
- **que**, dans une première routine (11), le dispositif de commande (5) interroge de manière cyclique, via des transmetteurs reliés à celui-ci, des données d'état du véhicule automobile (1) et les enregistre de façon intermédiaire, dans lequel, concernant ces données d'état, il s'agit de l'état d'actionnement du frein de stationnement, de l'état d'actionnement du frein de service, de l'état d'exécution de l'au moins un système d'assistance au conducteur, de la position de la pédale de gaz, de l'état de fonctionnement du moteur, de la vitesse propre du véhicule (1) et de la présence d'une instruction de diagnostic pour le capteur radar (3) ou l'au moins un système d'assistance au conducteur utilisant le capteur radar (3),
- **que** dans une deuxième routine (12), le dispositif de commande (5) vérifie dans une première interrogation (20) si la vitesse propre est de 0 km/h et si l'au moins un système d'assistance au conducteur utilisant les données radar est encore actif et si tel est le cas, dans l'étape de commande (28), maintient le capteur radar (3) actif ou le commute pour être actif, et continue alors avec la première interrogation (20),
- **que** le dispositif de commande (5), si tel n'est pas le cas, vérifie dans une deuxième interrogation (22) si tous les systèmes d'assistance au conducteur qui utilisent des données du capteur radar (3) sont dans l'état « erreur » et si tel est le cas, dans l'étape de commande (29), maintient le capteur radar (3) inactif ou le commute pour être inactif et n'émet donc pas de faisceaux radar et continue alors avec la première interrogation (20),
- **que** le dispositif de commande (5), si tel n'est pas le cas, vérifie dans une troisième interrogation (23) s'il y a une instruction pour un diagnostic de maintenance pour la vérification de l'au moins un système d'assistance au conducteur et/ou du capteur radar (3) et si tel est le cas, dans l'étape de commande (28), maintient le capteur radar (3) actif ou le commute pour être actif, et continue alors avec la première interrogation (20),
- **que** le dispositif de commande (5), si tel n'est pas le cas, vérifie dans une quatrième interrogation (24) si le moteur de traction est en marche et si tel n'est pas le cas, dans l'étape de commande (29), maintient le capteur radar (3) inactif ou le commute pour être inactif et continue alors avec la première interrogation (20),
- **que** le dispositif de commande (5), si tel est le cas, vérifie dans une cinquième interrogation (25) si le frein de stationnement est activé et si tel est le cas, à l'étape de commande (29), maintient le capteur radar (3) inactif ou le commute pour être inactif et continue alors avec la première interrogation (20),
- **que** le dispositif de commande (5), si tel n'est pas le cas, vérifie dans une sixième interrogation (26) si la vitesse propre est de 0 km/h et si le frein de service est actif et si tel est le cas, à l'étape de commande (29), maintient le capteur radar (3) inactif ou le commute pour être inactif et continue alors avec la première interrogation (20),
- **que** le dispositif de commande (5), si tel n'est pas le cas, vérifie dans une septième interrogation (27) si la vitesse propre est supérieure à 0 km/h et si tel est le cas, à l'étape de commande (28), maintient le capteur radar (3) actif ou le commute pour être actif et continue alors avec la première interrogation (20) et si tel n'est pas le cas, continue avec la première interrogation (20).

3. Procédé selon la revendication 2, **caractérisé en ce qu'**un autre système d'assistance au conducteur traitant les données radar du capteur radar (3) est prévu et qu'avant la deuxième interrogation (22), une autre interrogation (21) est insérée dans laquelle le dispositif de commande (5) vérifie si la vitesse propre est de 0 km/h et si l'autre système d'assistance au conducteur utilisant les données radar est encore actif et si tel est le cas, maintient le capteur radar (3) actif ou le commute pour être actif à l'étape de commande (28) et continue alors avec la première interrogation (20), et si tel n'est pas le cas, continue avec la deuxième interrogation (22).

4. Procédé selon la revendication 3, **caractérisé en ce que**, pour chaque système d'assistance au conducteur existant traitant les données radar du capteur radar (3), une telle interrogation a lieu et qu'après la répétition négative de toutes les interrogations, le dispositif de commande (5) continue avec la deuxième interrogation (22).

5. Procédé selon la revendication 2, **caractérisé en ce que** l'au moins un système d'assistance au conducteur comprend un système de freinage de secours.

6. Procédé selon la revendication 2, **caractérisé en ce que** l'au moins un système d'assistance au conducteur comprend un Adaptive Cruise Control System.

7. Procédé selon la revendication 2, **caractérisé en ce que** l'au moins un système d'assistance au conducteur comprend un Adaptive Cruise Control Stop&Go System.

8. Procédé selon la revendication 2, **caractérisé en ce qu'**avant la première interrogation (20), on place une interrogation concernant l'état d'ajustement du capteur radar (3) dans laquelle le dispositif de commande (5) vérifie si une information sur un ajustement réussi est enregistrée et si tel est le cas, le dispositif de commande (5) continue avec la première interrogation (20) et si tel n'est pas le cas, il envoie un message d'erreur au conducteur du véhicule automobile.

9. Procédé selon la revendication 8, **caractérisé en ce que** l'interrogation concernant l'état d'ajustement du capteur radar (3) a lieu une fois seulement après chaque démarrage du véhicule.

10. Procédé selon la revendication 2, **caractérisé en ce qu'**avant la première interrogation (20), on place une interrogation concernant l'état de fonctionnement du capteur radar (3) dans laquelle le dispositif de commande (5) vérifie si une information sur une vérification réussie du fonctionnement est enregistrée et si tel est le cas, le dispositif de commande (5) continue avec la première interrogation (20) et si tel n'est pas le cas, il envoie un message d'erreur au conducteur du véhicule automobile.

11. Procédé selon la revendication 10, **caractérisé en ce que** la vérification du fonctionnement est exécutée de manière répétée lors de la conduite et qu'une information correspondante sur l'état de fonctionnement est enregistrée dans une mémoire du dispositif de commande (5).
